# EUROPÄISCHE PATENTSCHRIFT

(11) **EP 1 016 293 B1**
(45) Veröffentlichungstag und Bekanntmachung des Hinweises auf die Patenterteilung: **22.10.2003**
(21) Anmeldenummer: 98952518.3
(22) Anmeldetag: 27.08.1998
(51) Int. Cl.: H04Q 7/24

(54) **VERFAHREN ZUM STEUERN DER ZUGRIFFSBERECHTIGUNGEN VON TELEKOMMUNIKATIONSGERÄTEN BEI GEGENSTATIONEN IN TELEKOMMUNIKATIONSSYSTEMEN MIT DRAHTLOSER TELEKOMMUNIKATION ZWISCHEN DEN TELEKOMMUNIKATIONSGERÄTEN UND DEN GEGENSTATIONEN**
METHOD FOR CONTROLLING THE ACCESS AUTHORISATIONS OF TELECOMMUNICATION DEVICES IN THE BASE STATIONS OF WIRELESS TELECOMMUNICATION SYSTEMS BETWEEN SAID TELECOMMUNICATION DEVICES AND SAID BASE STATIONS
PROCEDE POUR COMMANDER DES AUTORISATIONS D'ACCES D'APPAREILS DE TELECOMMUNICATION DANS DES STATIONS DE BASE DE SYSTEMES DE TELECOMMUNICATION SANS FIL ENTRE DES APPAREILS DE TELECOMMUNICATION ET DES STATIONS DE BASE

(30) Priorität: 15.09.1997 DE 19740560
(43) Veröffentlichungstag der Anmeldung: 05.07.2000
(73) Patentinhaber: SIEMENS AKTIENGESELLSCHAFT, 80333 München (DE)
(72) Erfinder: KAMPERSCHROER, Erich, D-46499 Hamminkeln (DE)
(86) Internationale Anmeldenummer: DE9802529
(87) Internationale Veröffentlichungsnummer: WO99014962

(56) Entgegenhaltungen:
- WO-A-95/31080

## Beschreibung

WO 95/31080 beschreibt ein solches Verfahren, wobei eine Residential-Basisstation im Rahmen den drahtlosen Telekommunikation nach Authentifizierung den beteiligten Telekommunikationsgeräte mit Hilfe mehrerer zu Fallszahlen eine Nachrichtenübertragungsstrecke zwischen systemfremden Telekommunikationsgeräten über eine Schnittstelle zu einem Telekommunikationetz aufbaut.

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtlos auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode Division Multiple Access) - z.B. nach Funkstandards wie DECT, GSM, WACS oder PACS, IS-54, IS-95, PHS, PDC etc. [vgl. IEEE Communications Magazine, January 1995, Seiten 50 bis 57; D.D. Falconer et al:"Time Division Multiple Access Methods for Wireless Personal Communications"] und/oder drahtgebunden erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z.B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden.

Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z.B. Impulse, digitale Signale) entstehen.

Ausgehend von dieser allgemeinen Definition eines Nachrichtensystems bezieht sich die Erfindung auf ein Verfahren zum Steuern der Zugriffsberechtigungen von Telekommunikationsgeräten bei Gegenstationen in Telekommunikationssystemen mit drahtloser Telekommunikation zwischen den Telekommunikationsgeräten und den Gegenstationen.

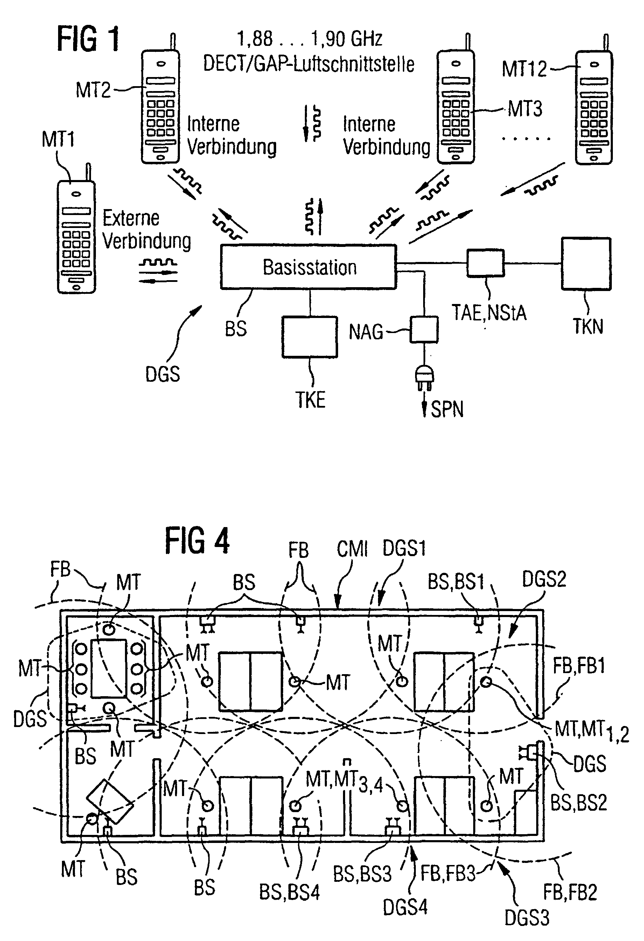

Telekommunikationssysteme der vorstehend definierten Art sind beispielsweise DECT-Systeme [**D**igital **E**nhanced (früher: **E**uropean) **C**ordless **T**elecommunication; *vgl.* ***(1):*** *Nachrichtentechnik Elektronik 42 (1992) Jan.*/*Feb. Nr. 1, Berlin, DE; U. Pilger "Struktur des DECT-Standards", Seiten 23 bis 29* ***in Verbindung mit*** *der ETSI-Publikation ETS 300175-1...9, Okt. 1992;* ***(2):*** *Telcom Report 16 (1993), Nr. 1, J. H. Koch: "Digitaler Komfort für schnurlose Telekommunikation - DECT-Standard eröffnet neue Nutzungsgebiete", Seiten 26 und 27;* ***(3):*** *tec 2*/*93 - Das technische Magazin von Ascom "Wege zur universellen mobilen Telekommunikation", Seiten 35 bis 42;* ***(4):*** *Philips Telecommunication Review, Vol. 49, No. 3, Sept. 1991, R. J. Mulder:" DECT, a universal cordless access system";* ***(5):*** *WO 93*/*21719 (FIG 1 bis 3 mit dazugehöriger Beschreibung)*] oder GAP-Systeme (**G**eneric **A**ccess **P**rofile; *vgl. ETSI-Publikation ETS 300444, December 1995, ETSI, FR)*, die beispielsweise gemäß der Darstellung in FIGUR 1 aufgebaut sein können. Der GAP-Standard ist eine Untermenge des DECT-Standards, dem die Aufgabe zukommt, die Interoperabilität der DECT-Luftschnittstelle für Telefonanwendungen sicherzustellen.

Nach dem DECT/GAP-Standard können gemäß der Darstellung in FIGUR 1 an einer DECT/GAP-Basisstation BS eines DECT/GAP-Systems DGS über eine für den Frequenzbereich zwischen 1,88 und 1,90 GHz ausgelegte DECT/GAP-Luftschnittstelle maximal 12 Verbindungen nach dem TDMA/FDMA/TDD-Verfahren (**T**ime **D**ivision **M**ultiple **A**ccess/**F**requency **D**ivision **M**ultiple **A**ccess/**T**ime **D**ivision **D**uplex) parallel zu DECT/GAP-Mobilteilen MT1...MT12 aufgebaut werden. Die Zahl 12 ergibt sich aus einer Anzahl "k" von für den Duplexbetrieb des DECT/GAP-Systems DGS zur Verfügung stehenden Zeitschlitzen bzw. Telekommunikationskanälen (k = 12). Die Verbindungen können dabei intern und/oder extern sein. Bei einer internen Verbindung können zwei an der Basisstation BS registrierte Mobilteile, z.B. das Mobilteil MT2 und das Mobilteil MT3, miteinander kommunizieren. Für den Aufbau einer externen Verbindung ist die Basisstation BS mit einem Telekommunikationsnetz TKN, z.B. in leitungsgebundener Form über eine Telekommunikationsanschlußeinheit TAE bzw. eine Nebenstellenanlage NStA mit einem leitungsgebundenen Telekommunikationsnetz oder gemäß der WO 95/05040 in drahtloser Form als Repeaterstation mit einem übergeordneten Telekommunikationsnetz, verbunden. Bei der externen Verbindung kann man mit einem Mobilteil, z.B. mit dem Mobilteil MT1, über die Basisstation BS, die Telekommunikationsanschlußeinheit TAE bzw. Nebenstellenanlage NStA mit einem Teilnehmer in dem Telekommunikationsnetz TKN kommunizieren. Besitzt die Basisstation BS - wie im Fall des Gigaset 951 (Siemens Schnurlostelefon, vgl. telcom Report 16, (1993) Heft 1, Seiten 26 und 27) - nur einen Anschluß zu der Telekommunikationsanschlußeinheit TAE bzw. der Nebenstellenanlage NStA, so kann nur eine externe Verbindung aufgebaut werden. Hat die Basisstation BS - wie im Fall des Gigaset 952 (Siemens Schnurlostelefon; vgl. telcom Report 16, (1993), Heft 1, Seiten 26 und 27) - zwei Anschlüsse zu dem Telekommunikationsnetz TKN, so ist zusätzlich zu der externen Verbindung mit dem Mobilteil MT1 eine weitere externe Verbindung von einem an die Basisstation BS angeschlossenen leitungsgebundenen Telekommunikationsendgerät TKE möglich. Dabei ist es prinzipiell auch vorstellbar, daß ein zweites Mobilteil, z.B. das Mobilteil MT12, anstelle des Telekommunikationsendgerätes TKE den zweiten Anschluß für eine externe Verbindung nutzt. Während die Mobilteile MT1...MT12 mit einer Batterie oder einem Akkumulator betrieben werden, ist die als schnurlose Klein-Vermittlungsanlage ausgebildete Basisstation BS über ein Netzanschlußgerät NAG an ein Spannungsnetz SPN angeschlossen.

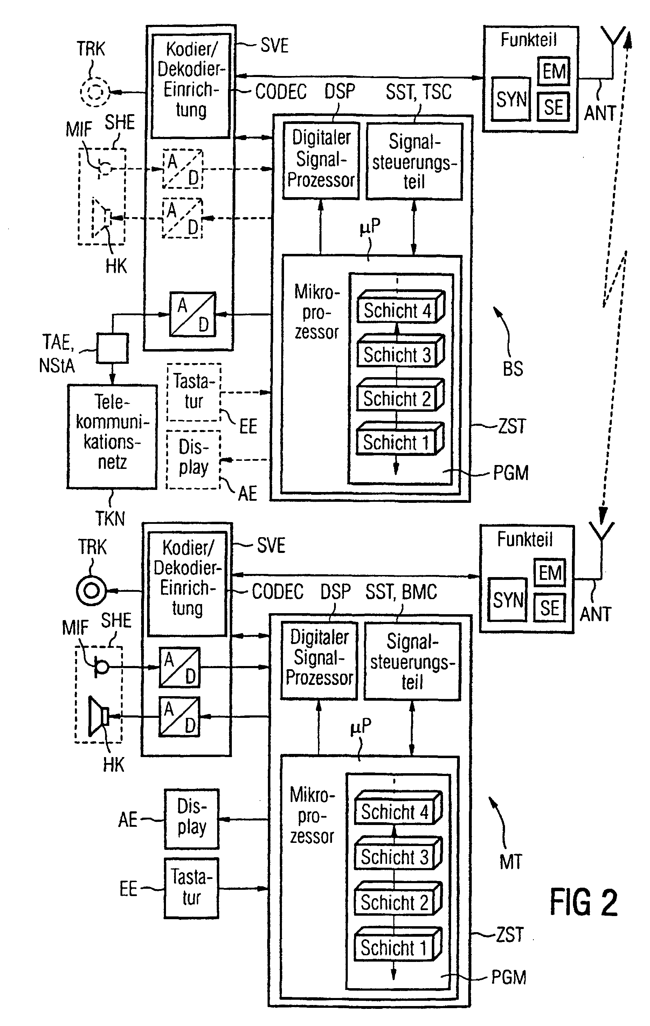

FIGUR 2 zeigt ausgehend von der Druckschrift *Components 31 (1993), Heft 6, Seiten 215 bis 218; S. Althammer, D. Brückmann: "Hochoptimierte IC's für DECT-Schnurlostelefone"* den prinzipiellen Schaltungsaufbau der Basisstation BS und des Mobilteils MT. Die Basisstation BS und das Mobilteil MT weisen danach ein Funkteil FKT mit einer zum Senden und Empfangen von Funksignalen zugeordneten Antenne ANT, eine Signalverarbeitungseinrichtung SVE und eine Zentrale Steuerung ZST auf, die in der dargestellten Weise miteinander verbunden sind. In dem Funkteil FKT sind im wesentlichen die bekannten Einrichtungen wie Sender SE, Empfänger EM und Synthesizer SYN enthalten. In der Signalverarbeitungseinrichtung SVE ist u.a. eine Kodier-/Dekodiereinrichtung CODEC enthalten. Die Zentrale Steuerung ZST weist sowohl für die Basisstation BS als für das Mobilteil MT einen Mikroprozessor µP mit einem nach dem OSI/ISO-Schichtenmodell [*vgl.* ***(1):*** *Unterrichtsblätter - Deutsche Telekom, Jg. 48, 2*/*1995, Seiten 102 bis 111;* ***(2):*** *ETSI-Publikation ETS 300175-1...9, Oktober 1992*] aufgebauten Programmodul PGM, einen Signalsteuerungsteil SST und einen Digitalen Signalprozessor DSP auf, die in der dargestellten Weise miteinander verbunden sind. Von den im Schichtenmodell definierten Schichten sind nur die unmittelbar für die Basisstation BS und das Mobilteil MT wesentlichen ersten vier Schichten dargestellt. Das Signalsteuerungssteil SST ist in der Basisstation BS als Time Switch Controller TSC und in dem Mobilteil MT als Burst Mode Controller BMC ausgebildet. Der wesentliche Unterschied zwischen den beiden Signalsteuerungsteilen TSC, BMC besteht darin, daß der basisstationsspezifische Signalsteuerungsteil TSC gegenüber dem mobilteilspezifischen Signalsteuerungsteil BMC zusätzlich Vermittlungsfunktionen (Switch-Funktionen) übernimmt.

Die prinzipielle Funktionsweise der vorstehend aufgeführten Schaltungseinheiten ist beispielsweise in der vorstehend zitierten Druckschrift *Components 31 (1993), Heft 6, Seiten 215 bis 218* beschrieben.

Der beschriebene Schaltungsaufbau nach FIGUR 2 wird bei der Basisstation BS und dem Mobilteil MT gemäß deren Funktion in dem DECT/GAP-System nach FIGUR 1 durch zusätzliche Funktionseinheiten ergänzt.

Die Basisstation BS ist über die Signalverarbeitungseinrichtung SVE und der Telekommunikationsanschlußeinheit TAE bzw. der Nebenstellenanlage NStA mit dem Telekommunikationsnetz TKN verbunden. Als Option kann die Basisstation BS noch eine Bedienoberfläche aufweisen (in FIGUR 2 gestrichelt eingezeichnete Funktionseinheiten), die z.B. aus einer als Tastatur ausgebildeten Eingabeeinrichtung EE, einer als Display ausgebildeten Anzeigeeinrichtung AE, einer als Handapparat mit Mikrofon MIF und Hörkapsel HK ausgebildeten Sprech-/Höreinrichtung SHE sowie einer Tonrufklingel TRK besteht.

Das Mobilteil MT weist die bei der Basisstation BS als Option mögliche Bedienoberfläche mit den zu dieser Bedienoberfläche gehörenden vorstehend beschriebenen Bedienelementen auf.

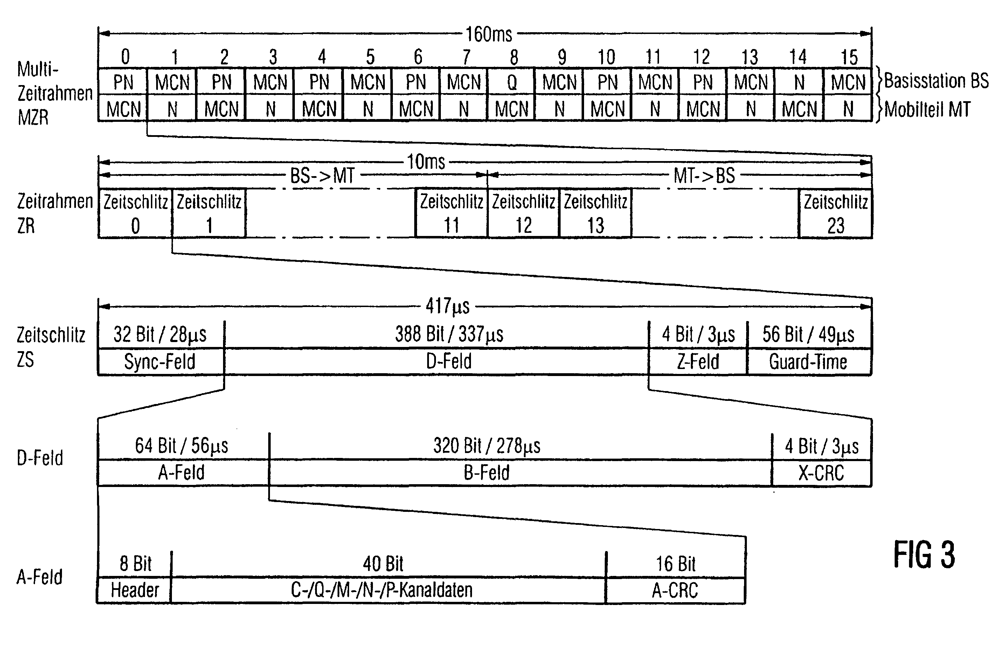

FIGUR 3 zeigt in Anlehnung an die Druckschrift "Nachrichtentechnik Elektronik 42 (1992) Jan./Feb., Nr. 1, Berlin, DE; U. Pilger: "Struktur des DECT-Standards", Seiten 23 bis 29 in Verbindung mit ETS 300 175-1...9, Oktober 1992" die TDMA-Struktur des DECT/GAP-Systems DGS. Das DECT/GAP-System ist ein bezüglich der Vielfachzugriffsverfahren hybrides System, bei dem nach dem FDMA-Prinzip auf zehn Frequenzen im Frequenzband zwischen 1,88 und 1,9 GHz Funknachrichten nach dem TDMA-Prinzip gemäß FIGUR 3 in einer vorgegebenen zeitlichen Abfolge von der Basisstation BS zum Mobilteil MT und vom Mobilteil MT zur Basisstation BS (**T**ime **D**ivision **D**uplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation BS und Mobilteil MT getrennt Informationen übertragen, die einen im DECT-Standard definierten C-, M-, N-, P-, Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 µs, von denen 12 Zeitschlitze ZS (Zeitschlitze 0 ... 11) für die Übertragungsrichtung "Basisstation BS → Mobilteil MT" und weitere 12 Zeitschlitze ZS (Zeitschlitze 12 ... 23) für die Übertragungsrichtung "Mobilteil MT → Basisstation BS" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen.

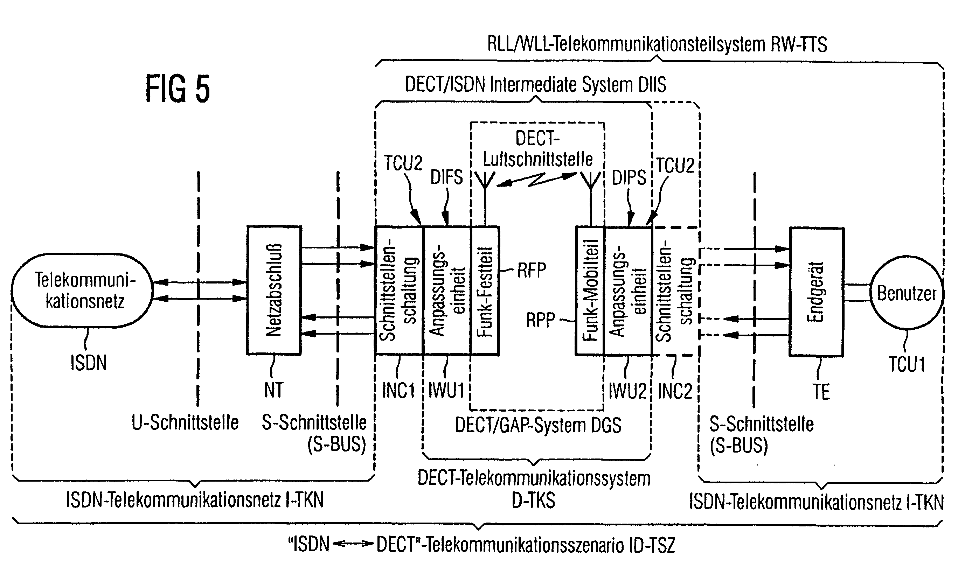

FIGUR 4 zeigt ausgehend von dem DECT/GAP-System DGS nach FIGUR 1 ein zellulares DECT/GAP-Multisystem CMI (**C**ordless **M**ulticell **I**ntegration), bei dem mehrere der vorstehend beschriebenen DECT/GAP-Systeme DGS mit jeweils einer Basisstation BS und einem/mehreren Mobilteil/en MT an einen beliebigen geographischen Ort, z.B. in einem Verwaltungsgebäude mit großräumigen Etagenbüros, konzentriert - im Sinne einer "Hot Spot"-Anordnung - vorhanden sind. Statt eines "geschlossenen" geographischen Ortes, wie das Verwaltungsgebäude, ist aber auch ein "offener" geographischer Ort mit strategischer Telekommunikationsbedeutung, z.B. Plätze in Großstädten mit einem hohen Verkehrsaufkommen, einer großen Ansammlung von Gewerbeeinheiten und einer großen Bewegung von Menschen, für die Installation eines zellularen DECT/GAP-Multisystems CMI möglich. Ein Teil der in dem Großraumbüro angeordneten Basisstationen BS sind dabei im Unterschied zu den in den FIGUREN 1 und 2 gezeigten Basisstationen gemäß der WO 94/10764 als Antenna Diversity-Basisstationen ausgebildet. Die Konzentration der DECT/GAP-Systeme DGS ist dabei so ausgeprägt (lückenlose Funkabdeckung des geographischen Ortes), daß einzelne DECT/GAP-Systeme DGS durch die sich überlappenden zellularen DECT/GAP-Funkbereiche FB in der gleichen Umgebung arbeiten.

Gleiche Umgebung kann dabei je nach Überlappungsgrad bedeuten, daß
a) eine erste Basisstation BS1 eines vorzugsweise als ersten DECT/GAP-System DGS1 in einem ersten Funkbereich FB1 und eine zweite Basisstation BS2 eines zweiten DECT/GAP-System DGS2 in einem zweiten Funkbereich FB2 angeordnet sind und Telekommunikationsverbindungen zu mindestens einem Mobilteil MT_{1,2} aufbauen können,
b) eine dritte Basisstation BS3 eines dritten DECT/GAP-Systems DGS3 und eine vierte Basisstation BS4 eines vierten DECT/GAP-Systems DGS4 in einem gemeinsamen dritten Funkbereich FB3 angeordnet sind und Telekommunikationsverbindungen zu mindestens einem Mobilteil MT_{3,4} aufbauen können.

Das in den FIGUREN 1 bis 4 dargestellte Schnurlos-Telekommunikations-Szenario, bei dem DECT-Mobilteile über eine DECT-Luftschnittstelle mit einer privaten (residential) DECT-Basisstation (FIGUR 1) bzw. mit einer oder mehreren privaten oder öffentlichen (public) DECT-Basisstationen (FIGUR 4) verbindbar sind, kann nun gemäß der Publikation *"Vortrag von A. Elberse, M. Barry, G. Fleming zum Thema: "DECT Data Services* - *DECT in Fixed and Mobile Networks", 17.*/*18. Juni 1996, Hotel Sofitel, Paris; Seiten 1 bis 12 und Zusammenfassung"* dahingehend erweitert werden, daß die DECT-Mobilteile über die DECT-Luftschnittstelle mit privaten und öffentlichen DECT-Basisstationen verbindbar sind.

Dieses Szenario kann nun gemäß der WO95/0504 (vgl. Figuren 3 bis 8 mit der jeweils dazugehörigen Beschreibung) im Hinblick auf ein **"U**niverselles **M**obil-**T**elekommunikations-**S**ystem" (UMTS) wiederum dahingehend erweitert werden, daß pikozellenbezogene Schnurlos-Telekommunikationssysteme (z.B. die bisher diskutierten DECT-Systeme unter CTM-Gesichtspunkten *(****C****ordless* ***T****erminal* ***M****obility; vgl. ETSI-Publikationen* ***(1):*** *"IN Architecture and Functionality for the support of CTM", Draft Version 1.10, September 1995;* ***(2):*** *"Cordless Terminal Mobility (CTM) - Phase 1, Service Description", Draft DE*/*NA-010039, Version 6, 2.Oktober 1995)* in eine übergeordnete Netzinfrastruktur (z.B. ISDN-, PSTN-, GSM- und/oder Satelliten-Netze) für Zugriffe *(vgl. ETSI-Publikation* ***"C****TM* ***A****ccess* ***P****rofile (CAP)" prETS 300824, November 1996)* einzubinden. Dies kann - gemäß dem Patentanspruch 1 der WO 95/05040 durch eine als DECT-Repeater ausgebildete DECT-Basisstation erreicht werden. In einem universellen Mobil-Telekommunikationssystem wird DECT vorrangig als eine "Netzzugriffstechnologie" für mobile Kommunikationsdienste *(vgl. Vortrag von A. Elberse, M. Barry, G. Fleming zum Thema: "DECT Data Services - DECT in Fixed and Mobile Networks", 17.*/*18. Juni 1996, Hotel Sofitel, Paris; Seiten 1 bis 12 und Zusammenfassung)* und nicht als Netz verstanden.

Stellvertretend für das vorstehend vorgestellte Szenario zeigt FIGUR 5 - ausgehend von den Druckschriften *"Nachrichtentechnik Elektronik, Berlin 45, (1995), Heft 1, Seiten 21 bis 23 und Heft 3, Seiten 29 und 30" sowie IEE Colloquium 1993, 173; (1993), Seiten 29*/*1 - 29*/*7; W.Hing, F.Halsall: "Cordless access to the ISDN basic rate service"* auf der Basis eines DECT/ISDN Intermediate **S**ystems DIIS gemäß *der ETSI-Publikation prETS 300822, Februar 1997 -* ein **"I**SDN ↔ **D**ECT"-**T**elekommunikations**sz**enario ID-TSZ (**I**ntegrated **S**ervices **D**igital **N**etwork ↔ **D**igital **E**nhanced **C**ordless **T**elecommunication) mit einem **I**SDN-**T**elekommuni**k**ations**n**etz I-TKN [*vgl. Druckschrift "Nachrichtentechnik Elektronik, Berlin 41-43,* ***T****eil: 1 bis 10,* ***T****1: (1991) Heft 3, Seiten 99 bis 102;* ***T****2: (1991) Heft 4, Seiten 138 bis 143;* ***T****3: (1991) Heft 5, Seiten 179 bis 182 und Heft 6, Seiten* 219 *bis 220;* ***T****4: (1991) Heft 6, Seiten 220 bis 222 und (1992) Heft 1, Seiten 19 bis 20;* ***T****5: (1992) Heft 2, Seiten 59 bis 62 und (1992) Heft 3, Seiten 99 bis 102;* ***T****6: (1992) Heft 4, Seiten 150 bis 153;* ***T****7: (1992) Heft 6, Seiten 238 bis 241;* ***T****8: (1993) Heft 1, Seiten 29 bis 33;* ***T****9: (1993) Heft 2, Seiten 95 bis 97 und (1993) Heft 3, Seiten 129 bis 135;* ***T****10: (1993) Heft 4, Seiten 187 bis 190;"*] und einem mit dem ISDN-Telekommunikationsnetz I-TKN verbundenen DECT-**T**elekommuni**k**ations**s**ystem D-TKS.

Das DECT-Telekommunikationssystem D-TKS kann dabei - wie im weiteren näher ausgeführt werden wird - Bestandteil eines DECT/ISDN Intermediate Systems DIIS bzw. eines RLL/WLL-Telekommunikationsteilsystems RW-TTS sein. Das DECT-Telekommunikationssystem D-TKS und somit das DECT/ISDN Intermediate System DIIS bzw. das RLL/WLL-Telekommunikationsteilsystem RW-TTS basieren vorzugsweise auf ein **D**ECT/**G**AP-**S**ystem DGS wie es beispielsweise in FIGUR 1 dargestellt ist.

Das DECT/ISDN Intermediate System DIIS bzw. das RLL/WLL-Telekommunikationsteilsystem RW-TTS kann alternativ auch auf einem GSM-System basieren (**G**roupe **S**péciale **M**obile oder **G**lobal **S**ystem for **M**obile Communication; vgl. Informatik Spektrum 14 (1991) Juni, Nr. 3, Berlin, DE; A.Mann: "Der GSM-Standard - Grundlage für digitale europäische Mobilfunknetze", Seiten 137 bis 152). Stattdessen ist es im Rahmen eines UMTS-Szenarios auch möglich, daß das ISDN-Telekommunikationsnetz I-TKN als GSM-Netz oder als PSTN-Netz (**P**ublic **S**witched **T**elecommunications **N**etwork) ausgebildet ist.

Darüber hinaus kommen als weitere Möglichkeiten für die Realisierung des DECT/ISDN Intermediate System DIIS bzw. des RLL/WLL-Telekommunikationsteilsystems RW-TTS oder des ISDN-Telekommunikationsnetzes I-TKN die eingangs erwähnten Systeme/Netze sowie zukünftige Systeme/Netze in Frage, die auf die bekannten Vielfachzugriffsmethoden FDMA, TDMA, CDMA (**F**requency **D**ivision **M**ultiple **A**ccess, **T**ime **D**ivision **M**ultiple **A**ccess, **C**ode **D**ivision **M**ultiple **A**ccess) und hieraus gebildete hybride vielfachzugriffsmethoden basieren.

Die Verwendung von Funkkanälen (z.B. DECT-Kanälen) in klassischen leitungsgebundenen Telekommunikationssystemen, wie dem ISDN, (z.B. RLL/WLL-Szenario) gewinnt zunehmend an Bedeutung, insbesondere vor dem Hintergrund zukünftiger alternativer Netzbetreiber ohne eigenes komplettes Drahtnetz.

So sollen z. B. bei dem RLL/WLL-Telekommunikationsteilsystem RW-TTS die drahtlose Anschlußtechnik RLL/WLL (**R**adio in the **L**ocal **L**oop/**W**ireless in the **L**ocal **L**oop) z.B. unter der Einbindung des DECT-Systems DS dem ISDN-Teilnehmer ISDN-Dienste an Standard-ISDN-Schnittstellen verfügbar gemacht werden (vgl. FIGUR 4).

In dem "ISDN ↔ DECT"-Telekommunikationsszenario ID-TSZ nach FIGUR 4 ist zum einen ein erster Telekommunikationsteilnehmer (Benutzer) TCU1 (**T**ele-**C**ommunication **U**ser) mit seinem Endgerät TE (**T**erminal **E**ndpoint; **T**erminal **E**quipment) z.B. über eine standardisierte S-Schnittstelle (S-BUS), das als lokale Nachrichtenübertragungsschleife ausgebildete - vorzugsweise DECT-spezifische und in dem RLL/WLL-Telekommunikationsteilsystem RW-TTS enthaltene - DECT/ISDN Intermediate System DIIS, eine weitere standardisierte S-Schnittstelle (S-BUS), einen Netzabschluß NT (**N**etwork **T**ermination) und eine standardisierte U-Schnittstelle des ISDN-Telekommunikationsnetzes I-TKN und zum anderen ein zweiter Telekommunikationsteilnehmer TCU2 als Endnutzer des DECT/ISDN Intermediate Systems DIIS in die ISDN-Welt mit den darin verfügbaren Diensten eingebunden.

Das DECT/ISDN Intermediate System DIIS besteht im wesentlichen aus zwei Telekommunikationsschnittstellen, einer ersten Telekommunikationsschnittstelle DIFS (**D**ECT **I**ntermediate **F**ixed **S**ystem) und einer zweiten Telekommunikationsschnittstelle DIPS (**D**ECT **I**ntermediate **P**ortable **S**ystem), die drahtlos, z.B. über eine DECT-Luftschnittstelle, miteinander verbunden sind. Wegen der quasi-ortsgebundenen ersten Telekommunikationsschnittstelle DIFS bildet das DECT/ISDN Intermediate System DIIS die vorstehend in diesem Zusammenhang definierte lokale Nachrichtenübertragungsschleife. Die erste Telekommunikationsschnittstelle DIFS enthält ein Funk-Festteil RFP (**R**adio **F**ixed **P**art), eine Anpassungseinheit IWU1 (**I**nter**W**orking **U**nit) und eine Schnittstellenschaltung INC1 (**IN**terface **C**ircuitry) zur S-Schnittstelle. Die zweite Telekommunikationsschnittstelle DIPS enthält ein Funk-Mobilteil RPP (Radio Portable **P**art) und eine Anpassungseinheit IWU2 (**I**nter**W**orking **U**nit) und gegebenenfalls eine Schnittstellenschaltung INC2 (**IN**terface Circuitry) zur S-Schnittstelle. Das Funk-Festteil RFP und das Funk-Mobilteil RPP bilden dabei das bekannte DECT/GAP-System DGS.

Die FIGUR 5 zeigt - wie bereits erwähnt - zum einen (1. Möglichkeit) als typisches RLL/WLL-Szenario wie das DECT/ISDN Intermediate System DIIS im Rahmen des RLL/WLL-Telekommunikationsteilsystems RW-TTS in das ISDN-Telekommunikationsnetz I-TKN als lokale Nachrichtenübertragungsschleife eingebunden ist und zum anderen (2. Möglichkeit) wie das DECT/ISDN Intermediate System DIIS unter CAP-Gesichtspunkten (**C**ordless Terminal Mobility **A**ccess **P**rofile) nur netzseitig mit dem ISDN-Telekommunikationsnetz I-TKN verbunden ist. Bei der 2. Möglichkeit ist die Schnittstellenschaltung INC2 der zweiten Telekommunikationsschnittstelle DIPS zur S-Schnittstelle nicht aktiv oder überhaupt nicht vorhanden. Um diesen Sachverhalt insgesamt grafisch darzustellen und zu untermauern, ist die Schnittstellenschaltung INC2 der zweiten Telekommunikationsschnittstelle DIPS gestrichelt gezeichnet. Während die zweite Telekommunikationsschnittstelle DIPS bei der 1. Möglichkeit beispielsweise nicht mobilteilspezifisch, d.h. mit Bedienoberfläche, ausgebildet ist, ist die zweite Telekommunikationsschnittstelle DIPS bei der 2. Möglichkeit als typisches Mobilteil mit einer Bedienoberfläche ausgebildet.

Der für das Universelles Mobil-Telekommunikationssystem (UMTS) vorgesehene CTM-Dienst (Cordless Terminal Mobility) soll CTM-Teilnehmern von schnurlosen Endgeräten Mobilität innerhalb und zwischen Netzen/Netzwerken (Stw.: Roaming) bieten. Dabei wird im CTM-Kontext zwischen einer "Residential"-Konfiguration und einer "Public Access"-Konfiguration unterschieden.

Der Begriff "Public Access"-Konfiguration besagt, daß der Zugriff für das Endgerät ins Netz über öffentliche Funk-Basisstationen (Public Radio Base Station) geschieht, die komplett aus dem Netz/Netzwerk gesteuert werden.

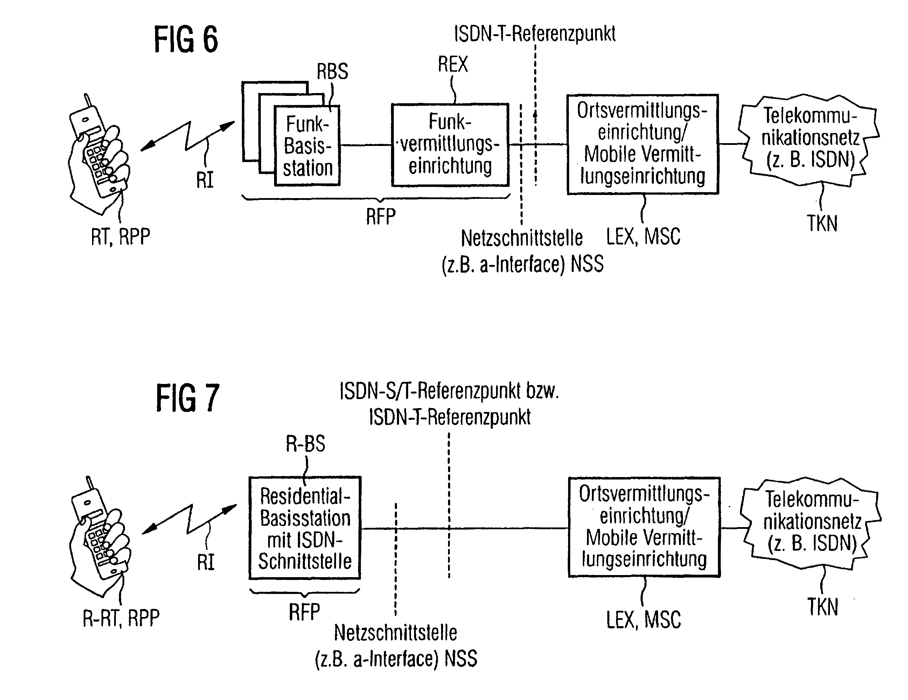

FIGUR 6 zeigt den prinzipiellen Aufbau einer solchen "Public Access"-Konfiguration, bei der ein mobiles öffentliches Funk-Endgerät RT (Public Radio Terminal), das gemäß dem DECT- bzw. CTM-Standard als Funk-Mobilteil RPP (Radio Portable Part) bezeichnet wird, drahtlos über eine Funk-Schnittstelle RI (Radio Interface) mit einer öffentlichen Funk-Basisstation RBS verbunden ist. Die Funk-Basisstation RBS bzw. die Funk-Basisstationen RBS ist/sind ihrerseits über eine Funk-Vermittlungseinrichtung REX (Radio Exchange) und eine Ortsvermittlungseinrichtung LEX (Local Exchange) und/oder eine mobile Vermittlungseinrichtung MSC (Mobile Switching Center) mit dem z.B. als ISDN-Netz ausgebildeten Telekommunikationsnetz TKN verbunden. Die Funk-Basisstation/en RBS und die Funk-Vermittlungseinrichtung REX werden dabei gemäß dem DECT- bzw. CTM-Standard als Funk-Festteil RFP (Radio Fixed Part) bezeichnet. In dieser Konfiguration wird das Funk-Festteil RFP über eine Netzschnittstelle NSS, das sogenannte α-Interface [vgl. ETSI-Publikation DE/SPS-05121, Version 1.6, Mai 1997] und den ISDN-T-Referenzpunkt an das öffentliche Netz/Netzwerk angeschlossen [vgl. ETSI Technical Report TCR-TR 013, 1991]. Desweiteren werden die Funk-Basisstationen RBS komplett vom Netz/Netzwerk gesteuert, so wird ihnen z.B. vorgegeben, welche Kennungen (Identities) sie z.B. nach dem DECT-Standard über die Luft zu übertragen haben.

In öffentlichen Netzen synchronisieren sich die mobilen Funk-Endgeräte RT über die von der Funk-Basisstation RBS gesendeten "öffentlichen Zugriffsrechte" (Public Access Rights) auf die entsprechenden Funk-Basisstationen RBS und können dann entsprechende Gespräche (Calls) absetzen [vgl. ETSI-Publikation ETS300175-6, Oktober 1992, Kap. 4, 5 und 8].

Der Begriff "Residential"-Konfiguration besagt im CTM-Kontext, daß der Zugriff für Funk-Endgeräte ins Netz über private Basisstationen (Residential-Basisstation) geschieht. Besitzer der Basisstationen haben hier die Möglichkeit, einen Vertrag mit den öffentlichen Netzbetreibern derart abzuschließen, daß an der privaten Basisstation vorbeigehende Netzteilnehmer mit einer "öffentlichen Anmeldung" (Public Subscription) bei den privaten Basisstationen in das öffentliche Netz hinein telekommunizieren können. Hierdurch erspart man sich das kostenintensive Installieren von öffentlichen Basisstationen wie in FIGUR 6.

FIGUR 7 zeigt den prinzipiellen Aufbau einer solchen "Residential"-Konfiguration, bei der ein mobiles privates Funk-Endgerät R-RT (Residential Radio Terminal), das gemäß dem DECT- bzw. CTM-Standard als Funk-Mobilteil RPP (Radio Portable Part) bezeichnet wird, drahtlos über eine Funk-Schnittstelle RI (Radio Interface) mit einer Residential-Basisstation R-BS verbunden ist. Die Residential-Basisstation R-BS ist ihrerseits über eine Ortsvermittlungseinrichtung LEX (Local Exchange) und/oder eine mobile Vermittlungseinrichtung MSC (Mobile Switching Center) mit dem z.B. als ISDN-Netz ausgebildeten Telekommunikationsnetz TKN verbunden und weist dementsprechend eine ISDN-Schnittstelle auf. Die Residential-Basisstation R-BS mit der ISDN-Schnittstelle wird dabei gemäß dem DECT- bzw. CTM-Standard als Funk-Festteil RFP (Radio Fixed Part) bezeichnet. In dieser Konfiguration wird das Funk-Festteil RFP über eine Netzschnittstelle NSS, das sogenannte α-Interface [vgl. ETSI-Publikation DE/SPS-05121, Version 1.6, Mai 1997] und den ISDN-S/T-Referenzpunkt oder den ISDN-T-Referenzpunkt an das öffentliche Netz/Netzwerk angeschlossen [vgl. ETSI Technical Report TCR-TR 013].

Das technische Problem ist es nun, daß eine Residential-Basisstation nicht die "öffentlichen Zugriffsrechte" (Public Access Rights) überträgt, die das Funk-Endgerät RT zur Synchronisation benötigt. Die DECT-spezifischen Residential-Basisstation sendet z.B. lediglich die "privaten Zugriffsrechte" (Private Access Rights) in Form einer PARI-Information (Primary Access Rights Identity) mit der Teilinformation "ARI Class A" (Access Rights Identity) [vgl. ETSI-Publikation ETS300175-6, Oktober 1992, Kap. 4, 5 und 8]. An der Residential-Basisstation vorbeigehende Netzteilnehmer mit einer "öffentlichen Anmeldung" (Public Subscription) bei den privaten Basisstationen können deshalb nie in das öffentliche Netz hinein telekommunizieren.

Die der Erfindung zugrundeliegende Aufgabe besteht darin, in Telekommunikationssystemen mit drahtloser Telekommunikation zwischen Telekommunikationsgeräten und Gegenstationen Gegenstationen mit privater Zugriffsberechtigung für Telekommunikationsgeräte zumindest temporär auch als Gegenstationen mit öffentlicher Zugriffsberechtigung für Telekommunikationsgeräte nutzen zu können.

Diese Aufgabe wird durch die im Patentanspruch 1 angegebenen Merkmale gelöst.

Die der Erfindung zugrundeliegende Idee besteht darin, daß sämtliche für öffentliche und/oder private Zwecke ausgelegte Telekommunikationsgeräte insbesondere bei Gegenstationen mit privaten Zugriffsberechtigungen (Residential-Gegenstationen) in Telekommunikationssystemen der eingangs umrissenen Art mit drahtloser Telekommunikation zwischen den Telekommunikationsgeräten und den Gegenstationen - z.B. für öffentliche und/oder private Zwecke ausgelegte DECT-Endgeräte insbesondere bei DECT-spezifischen Residential-Gegenstationen in DECT-Systemen - dadurch Zugriffsberechtigung erlangen bzw. zugriffsberechtigt sind/werden, daß die Residential-Gegenstationen, die über Netzschnittstellen mit Telekommunikationsnetzen verbindbar sind, in den Telekommunikationsnetzen vorhandene die Zugriffsberechtigungen angebende (signalisierende) Informationen (z.B. DECT-spezifische SARI-Informationen) über die Netzschnittstellen abrufen und an die Telekommunikationsgeräte über die "Luft" weitergegeben.

Damit die Residential-Gegenstationen die die Zugriffsberechtigungen angebenden Informationen nicht willkürlich abrufen können, ist es gemäß Anspruch 2 von Vorteil, zwischen den Residential-Gegenstationen und den Telekommunikationsnetzen Authentifizierungsprozeduren durchzuführen. Durch diese Authentifizierungsprozeduren müssen sich die Residential-Gegenstationen legitimieren bzw. ausweisen, daß sie berechtigt (autorisiert) sind, die Informationen in den Netzen abzurufen. Alternativ ist es auch möglich ohne Authentifizierungsprozeduren auzukommen, wenn das Abrufen der Informationen aufgrund von Angeboten der Telekommunikationsnetzbetreiber an die Besitzer (Benutzer) der Residential-Gegenstationen, die Residential-Gegenstationen gegen netzseitige Gegenleistungen (z.B. Geldzahlungen, Ermäßigung von Netzbenutzungsgebühren etc.) für öffentliche Zugriffe durch Telekommunikationsgeräte zeitlich befristet oder unbefristet zur Verfügung zu stellen, von den Residential-Gegenstationen im Sinne einer Angebotsannahme eingeleitet wird.

Ein weiterer Vorteil (Stw.: Flexibilität) der Erfindung besteht darin, daß die Zulassungen der Residential-Gegenstationen als Gegenstationen mit öffentlicher Zugriffsberechtigung jederzeit aufhebbar bzw. widerrufbar sind. Nach Anspruch 3 kann diese Aufhebung bzw. der Widerruf durch die Netzbetreiber erfolgen, während gemäß Anspruch 4 die Aufhebung bzw. der Widerruf durch die Besitzer der Residential-Gegenstationen erfolgt.

Nach Anspruch 5 ist es von Vorteil, wenn das Abrufen der informationen und das Aufheben bzw. Widerrufen der Zulassungen durch benutzerspezifische Bedienprozeduren an den Residential-Gegenstationen initiiert werden. Bei Erst-Inbetriebnahmen der Residential-Gegenstationen sind z.B. die Einschaltvorgänge als benutzerspezifische Bedienprozeduren vorgesehen.

Nach Anspruch 6 ist es aus Gründen der Netzplanung seitens der Netzbetreiber und unter Berücksichtigung allgemeiner vereinbarungs- bzw. vertragsrechtlicher Grundsätze von Vorteil, wenn die Aufhebung bzw. der Widerruf der jeweils anderen Seite angekündigt wird.

Weitere vorteilhafte Weiterbildungen der Erfindung sind in den übrigen Patentansprüchen angegeben.

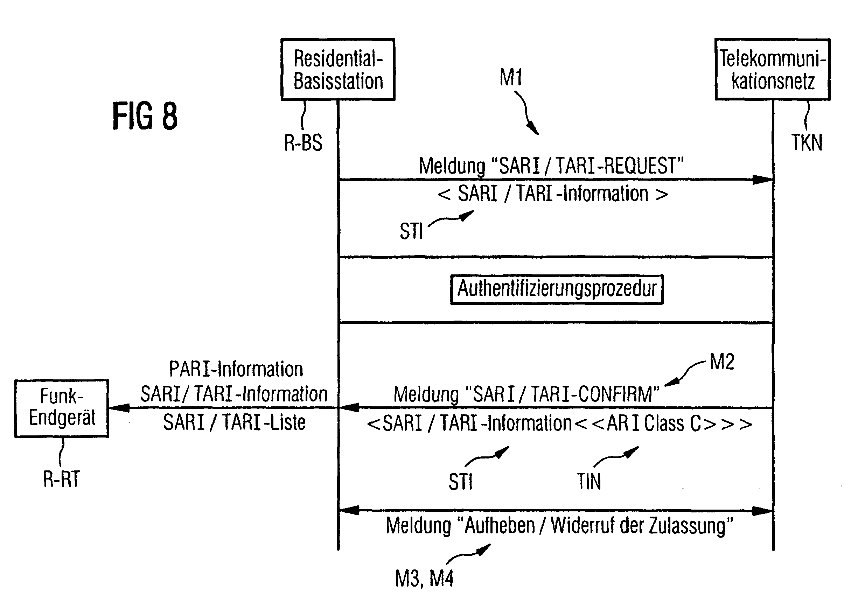

Ein Ausführungsbeispiel der Erfindung wird anhand der FIGUR 8 erläutert.

FIGUR 8 zeigt ausgehend von FIGUR 7 ein Meldungsflußdiagramm zwischen einer DECT-spezifischen Residential-Basisstation R-BS eines DECT-Systems und einem öffentlichen Telekommunikationsnetz TKN. Von der Residential-Basisstation R-BS wird eine erste Meldung "SARI/TARI-REQUEST" M1 (Secondary/Tertiary Access Rights Identity) über die Netzschnittstelle NSS, das sogenannte α-Interface, zum öffentlichen Telekommunikationsnetz TKN zur Anforderung einer systemspezifischen SARI/TARI-Information STI, TIN gemäß dem DECT-Standard [vgl. ETSI-Publikation ETS300175-6, Oktober 1992, Kap. 4, 5 und 8] übertragen. Danach kann über die Netzschnittstelle optional eine Authentisierungsprozedur zwischen der Residential-Basisstation R-BS und dem öffentlichen Telekommunikationsnetz TKN durchgeführt werden. Mit dieser Prozedur muß sich die Residential-Basisstation R-BS beim Telekommunikationsnetz TKN im Sinne des - vorstehend erwähnten - abgeschlossenen Vertrages legitimieren. Im Anschluß daran wird nach gegebenenfalls erfolgreicher Authentisierung von dem Telekommunikationsnetz TKN als Antwort auf die erste Meldung M1 über die Netzschnittstelle NSS eine zweite Meldung "SARI/TARI-CONFIRM" M2 zur Residential-Basisstation R-BS übertragen. Mit dieser zweiten Meldung M2 wird der Residential-Basisstation R-BS die systemspezifische SARI/TARI-Information STI mit einer Teilinformation "ARI Class C" TIN [vgl. ETSI-Publikation ETS300175-6, Oktober 1992, Kap. 4, 5 und 8] zur Verfügung gestellt.

Je nachdem, um was für ein Telekommunikationsnetz TKN es sich bei dem Telekommunikationsnetz TKN handelt, können auch andere Teilinformationen "ARI Class B" oder "ARI Class D" in der SARI/TARI-Information STI enthalten sein [vgl. ETSI-Publikation ETS300175-6, Oktober 1992, Kap. 4, 5 und 8].

Darüber hinaus können, wenn das Telekommunikationsnetz TKN mit dem diesen Netz zugeordneten drahtlosen Telekommunkationssystem an andere Telekommunikationsnetzen TKN mit diesen zugeordneten anderen drahtlosen Telekommunikationssystemen vertraglich gebunden ist, dementsprechend auch mehrere sich jeweils durch Zusatzinformationen unterscheidende systemspezifische SARI/TARI-Informationen mit den Teilinformationen "ARI Class B", "ARI Class C" und/oder "ARI Class D" übertragen werden.

Nach Erhalt der SARI/TARI-Informationen mit den Teilinformationen "ARI Class B", "ARI Class C" und/oder "ARI Class D" überträgt die Residential-Basisstation R-BS neben der PARI-Information mit der Teilinformation "ARI Class A" eine SARI/TARI-Information mit den Teilinformationen "ARI Class B", "ARI Class C" und/oder "ARI Class D" oder eine mehrere SARI/TARI-Informationen mit den Teilinformationen "ARI Class B", "ARI Class C" und/oder "ARI Class D" enthaltende SARI/TARI-Liste an das mobile private Funk-Endgerät R-RT des DECT-Systems.

Durch weitere Meldungen, eine dritte Meldung M3 und eine vierte Meldung M4, kann die vorstehend beschriebene Zulassung der Residential-Basisstation R-BS als Basisstation mit öffentlicher Zugriffsberechtigung jederzeit netz- und/oder stationsseitig wieder aufgehoben bzw. widerrufen werden.

## Patentansprüche

1. Verfahren zum Steuern der Zugriffsberechtigungen von Telekommunikationsgeräten (RT, R-RT) bei Gegenstationen (RBS, R-BS) in Telekommunikationssystemen mit drahtloser Telekommunikation zwischen den Telekommunikationsgeräten (RT, R-RT) und den Gegenstationen (RBS, R-BS), wobei in den Telekommunikationssystemen Residential-Gegenstationen (R-BS) mit privater Zugriffsberechtigung über Netzschnittstellen (NSS) mit Telekommunikationsnetzen (TKN) verbindbar sind, **gekennzeichnet durch** folgende Verfahrensschritte:
a) die Residential-Gegenstationen (R-BS) senden im Rahmen der drahtlosen Telekommunikation erste Informationen (PARI) mit ersten Teilinformationen (ARI Class A), mit denen sich die Residential-Gegenstationen (R-BS) gegenüber ersten Telekommunikationsgeräten (R-RT) als Gegenstationen mit privater Zugriffsberechtigung zu erkennen geben,
b) die Residential-Gegenstationen (R-BS) übertragen über die Netzschnittstellen (NSS) erste Nachrichten (M1) in die Telekommunikationsnetze (TKN), mit denen die Residential-Gegenstationen (R-BS) von den Netzbetreibern der Telekommunikationsnetze (TKN) zweite Informationen (SARI, TARI) mit zweiten Teilinformationen (ARI Class B, ARI Class C, ARI Class D) anfordern,
c) die Netzbetreiber der Telekommunikationsnetze (TKN) übertragen über die Netzschnittstellen (NSS) als Antwort zweite Nachrichten (M2) an die Residential-Gegenstationen (R-BS), mit denen die von den Residential-Gegenstationen (R-BS) angeforderten zweiten Informationen (SARI, TARI) mit den zweiten Teilinformationen (ARI Class B, ARI Class C, ARI Class D) übertragen werden,
d) die Residential-Gegenstationen (R-BS) senden im Rahmen der Nachrichtenübertragung die zweiten Informationen (SARI, TARI) mit den zweiten Teilinformationen (ARI Class B, ARI Class C, ARI Class D), mit denen sich die Residential-Gegenstationen (R-BS) gegenüber telekommunikationssystemeigenen und/oder telekommunikationssystemfremden zweiten Telekommunikationsgeräten (RT) als Gegenstationen mit öffentlicher Zugriffsberechtigung zu erkennen geben.

2. Verfahren nach Anspruch 1, **dadurch gekennzeichnet, daß**
die Residential-Gegenstationen (R-BS) sich nach der Übertragung der ersten Nachrichten (M1) und vor der Übertragung der zweiten Nachrichten (M2) bei den Netzbetreibern mit netzschnittstellenspezifische Authentifizierungsprozeduren authentifizieren.

3. Verfahren nach Anspruch 1 oder 2, **dadurch gekennzeichnet, daß**
die von den Residential-Gegenstationen (R-BS) mit dem Empfangen der zweiten Nachrichten (M2) von den Telekommunikationsnetzen (TKN) erhaltenen Zulassungen, sich als Gegenstationen mit öffentlicher Zugriffsberechtigung für die zweiten Telekommunikationsgeräte (RT) erkennen zu geben, telekommunikationsnetzseitig von den Netzbetreibern durch das Übertragen von dritten Nachrichten (M3) von den Telekommunikationsnetzen (TKN) zu den Residential-Gegenstationen (R-BS) aufhebbar sind.

4. Verfahren nach einem der Ansprüche 1 bis 3, **dadurch gekennzeichnet, daß**
die von den Residential-Gegenstationen (R-BS) mit dem Empfangen der zweiten Nachrichten (M2) von den Telekommunikationsnetzen (TKN) erhaltenen Zulassungen, sich als Gegenstationen mit öffentlicher Zugriffsberechtigung für die zweiten Telekommunikationsgeräte (RT) erkennen zu geben, stationsseitig von den Benutzern der Residential-Gegenstationen (R-BS) durch das Übertragen von vierten Nachrichten (M4) von den Residential-Gegenstationen (R-BS) zu den Telekommunikationsnetzen (TKN) aufhebbar sind.

5. Verfahren nach einem der Ansprüche 1 bis 4, **dadurch gekennzeichnet, daß**
die Übertragung der ersten Nachrichten (M1) und vierten Nachrichten (M4) durch benutzerspezifische Bedienprozeduren an den Residential-Gegenstationen (R-BS) initiiert werden.

6. Verfahren nach Anspruch 3 oder 4, **dadurch gekennzeichnet, daß**
die Benutzer der Residential-Gegenstationen (R-BS) und die Netzbetreiber der jeweils anderen Seite Zusatzinformationen übertragen, mit denen die Absicht, die Zulassungen aufzuheben, angekündigt werden.

7. Verfahren nach einem der Ansprüche 1 bis 6, **dadurch gekennzeichnet, daß**
die Telekommunikationssysteme DECT-Systeme, die Gegenstationen DECT-Basisstationen und/oder DECT-Repeater und die Telekommunikationsgeräte DECT-Mobilteile und/oder DECT-Netzabschlußbaugruppen mit zugeordneten drahtgebundenen, Bedienoberflächen aufweisenden Endgeräten sind.

8. Verfahren nach einem der Ansprüche 1 bis 7, **dadurch gekennzeichnet, daß**
die Telekommunikationsnetze (TKN) ISDN-Netze und die Netzschnittstellen (NSS) ISDN-spezifische α-Schnittstellen sind.

9. Verfahren nach einem der Ansprüche 1 bis 7, **dadurch gekennzeichnet, daß**
die Telekommunikationsnetze (TKN) PSTN-Netze, GSM-Netze oder bezüglich CDMA-/FDMA-/TDMA-Vielfachzugriffsmethoden hybride Netze und die Netzschnittstellen (NSS) PSTN-spezifische Netzschnittstellen, GSM-spezifische Netzschnittstellen oder bezüglich der hybriden Netze spezifische Netzschnittstellen sind.

10. Verfahren nach einem der Ansprüche 1 bis 6, **dadurch gekennzeichnet, daß**
die Telekommunikationssysteme GSM-Systeme, die Gegenstationen GSM-Basisstationen mit zugeordneten zentralen Vermittlungseinrichtungen und die Telekommunikationsgeräte GSM-Mobilteile und/oder GSM-Netzabschlußbaugruppen mit zugeordneten drahtgebundenen, Bedienoberflächen aufweisenden Endgeräten sind.

11. Verfahren nach einem der Ansprüche 1 bis 6, **dadurch gekennzeichnet, daß**
die Telekommunikationssysteme bezüglich der CDMA-/FDMA-/TDMA-Vielfachzugriffsmethoden hybride Systeme, die Gegenstationen hybride Basisstationen und die Telekommunikationsgeräte hybride Mobilteile und/oder hybride Netzabschlußbaugruppen mit zugeordneten drahtgebundenen, Bedienoberflächen aufweisenden Endgeräten sind.

12. Verfahren nach Anspruch 6, **dadurch gekennzeichnet, daß**
die ersten Informationen (PARI) DECT-spezifische PARI-Informationen sind, die zweiten Informationen (SARI, TARI) DECT-spezifische SARI-Informationen und/oder TARI-Informationen sind, die ersten Teilinformationen (ARI Class A) "ARI class A"-Daten und gegebenenfalls telekommunikationssystemspezifische Daten enthalten und die zweiten Teilinformationen (ARI Class B, ARI Class C, ARI Class D) "ARI class B-Daten", "ARI class C"-Daten und/oder "ARI class D"-Daten und gegebenenfalls telekommunikationssystemspezifische Daten enthalten.

13. Verfahren nach Anspruch 12, **dadurch gekennzeichnet, daß**
die ersten Nachrichten (M1) netzschnittstellenspezifische Meldungen "SARI/TARI-REQUEST" und die zweiten Nachrichten (M2) Meldungen "SARI/TARI-CONFIRM" sind.

## Claims

1. Method for controlling access authorizations from telecommunications appliances (RT, R-RT) to remote stations (RBS, R-BS) in telecommunications systems with wire free telecommunication between the telecommunications appliances (RT, R-RT) and remote stations (RBS, R-BS), in which case residential remote stations (R-BS) with private access authorization via network interfaces (NSS) to telecommunications networks (TKN) can be connected to telecommunications systems, **characterized by** the following method steps:
a) the residential remote stations (R-BS) transmit first information (PARI) with first information elements (ARI Class A) in the course of wire free communication, by means of which the residential remote stations (R-BS) are identified to the first telecommunications appliances (R-RT) as remote stations with private access authorization,
b) the residential remote stations (R-BS) transmit first messages (M1) via the network interfaces (NSS) to the telecommunications networks (TKN), by means of which the residential remote stations (R-BS) request from the network operators of the telecommunications networks (TKN) second information items (SARI, TARI) with second information elements (ARI Class B, ARI Class C, ARI Class D),
c) the network operators of the telecommunications networks (TKN) transmit via the network interfaces (NSS) as a response second messages (M2) to the residential remote stations (R-BS), by means of which the second information items (SARI, TARI) which are requested by the residential remote stations (R-BS) are transmitted together with the second information elements (ARI Class B, ARI Class C, ARI Class D),
d) residential remote stations (R-BS) transmit the second information items (SARI, TARI) together with the second information elements (ARI Class B, ARI Class C, ARI Class D) in the course of message transmission, by means of which the residential remote stations (R-BS) are identified to second telecommunications appliances (RT), which are within the telecommunications system and/or are external to the telecommunications system, as remote stations with public access authorization.

2. Method according to Claim 1, **characterized in that** the residential remote stations (R-BS) are authenticated with the network operators using network-interface-specific authorization procedures after the transmission of the first messages (M1) and before the transmission of the second messages (M2).

3. Method according to Claim 1 or 2, **characterized in that**
the approvals which are granted to the residential remote stations (R-BS) by the telecommunications networks (TKN) with the reception of the second messages (M2) to be identified as remote stations with public access authorization for the second telecommunications appliances (RT) can be cancelled at the telecommunications network end by the network operators by the transmission of third messages (M3) from the telecommunications networks (TEN) to the residential remote stations (R-BS).

4. Method according to one of Claims 1 to 3,
**characterized in that**
the approvals which are granted to the residential remote stations (R-BS) by the telecommunications networks (TKN) with the reception of the second messages (M2) to be identified as remote stations with public access authorization for the second telecommunications appliances (RT) can be cancelled at the station end by the users of the residential remote stations (R-BS) by the transmission of fourth messages (M4) from the residential remote stations (R-BS) to the telecommunications networks (RKN).

5. Method according to one of Claims 1 to 4,
**characterized in that**
the transmission of the first messages (M1) and of the fourth messages (M4) is initiated by user-specific control procedures at the residential remote stations (R-BS).

6. Method according to Claim 3 or 4, **characterized in that**
the users of the residential remote stations (R-BS) and the network operators at the respective other end transmit additional information, notifying the intention to cancel approvals.

7. Method according to one of Claims 1 to 6,
**characterized in that**
the telecommunications systems are DECT systems, the remote stations are DECT base stations and/or DECT repeaters, and the telecommunications appliances are DECT mobile parts and/or DECT network termination units with associated cable-connected terminals which have operator interfaces.

8. Method according to one of Claims 1 to 7,
**characterized in that**
the telecommunications networks (TKN) are ISDN networks, and the network interfaces (NSS) are ISDN-specific α interfaces.

9. Method according to one of Claims 1 to 7,
**characterized in that**
the telecommunications networks (TKN) are PSTN networks, GSM networks or hybrid networks with regard to CDMA/FDMA/TDMA multiple access methods, and the network interfaces (NSS) are PSTN-specific network interfaces, GSM-specific network interfaces or specific network interfaces for the hybrid networks.

10. Method according to one of Claims 1 to 6,
**characterized in that**
the telecommunications systems are GSM systems, the remote stations are GSM base stations with associated central switching devices, and the telecommunications appliances are GSM mobile parts and/or GSM network termination units with associated wire-connected terminals which have operator interfaces.

11. Method according to one of Claims 1 to 6,
**characterized in that**
the telecommunications systems are hybrid systems with respect to CDMA/FDMA/TDMA multiple access methods, the remote stations are hybrid base stations and the telecommunications appliances are hybrid mobile parts and/or hybrid network termination units with associated wire-connected terminals which have operator interfaces.

12. Method according to Claim 6, **characterized in that**
the first information (PARI) is DECT-specific PARI information, the second information (SARI, TARI) is DECT-specific SARI information and/or TARI information, the first information elements (ARI Class A) contain "ARI class A" data and, possibly, telecommunications-system-specific data, and the second information elements (ARI Class B, ARI Class C, ARI Class D) contain "ARI class B" data and/or "ARI class C" data and/or "ARI class D" data and possibly telecommunications-system-specific data.

13. Method according to Claim 12, **characterized in that**
the first messages (M1) are network-interface-specific "SARI/TARI-REQEST" messages and the messages (M2) are "SARI/TARI-CONFIRM" messages.

## Revendications

1. Procédé pour commander des autorisations d'accès d'appareils de télécommunication (RT, R-RT) dans des stations de base (RBS, R-BS) de systèmes de télécommunication sans fil entre des appareils de télécommunication (RT, R-RT) et des stations de base (RBS, R-BS), des stations de base résiduelles (R-BS) munies d'une autorisation d'accès privée pouvant être reliée à des réseaux de télécommunication (TKN) via des interfaces de réseau (NSS) dans les systèmes de télécommunication,
**caractérisées par** les étapes suivantes :
a) Les stations de base résidentielles (R-BS) émettent, dans le cadre de la télécommunication sans fil, de premières informations (PARI) contenant de premières informations partielles (ARI classe A), avec lesquelles les stations de base résidentielles (R-BS) se font reconnaître vis-à-vis des premiers appareils de télécommunication (R-RT) comme stations de base munies d'une autorisation d'accès privée,
b) les stations de base résidentielles (R-BS) transmettent via les interfaces de réseau (NSS) de premières informations (M1) dans les réseaux de télécommunication (TKN), avec lesquels les stations de base résidentielles (R-BS) demandent aux exploitants de réseaux de télécommunication (TKN) des deuxièmes informations (SARI, TARI) contenant des deuxièmes informations partielles (ARI classe B, ARI classe C, ARI classe D),
c) les exploitants de réseaux de télécommunication (TKN) transmettent via les interfaces de réseau (NSS) comme réponse des deuxièmes informations (M2) aux stations de base résidentielles (R-BS), avec lesquelles les deuxièmes informations (SARI, TARI) demandées par les stations de base résidentielles (R-BS) sont transmises conjointement avec les deuxièmes informations partielles (ARI classe B, ARI classe C, ARI classe D),
d) les stations de base résidentielles (R-BS) émettent dans le cadre de la transmission d'informations les deuxièmes informations (SARI, TARI) conjointement avec les deuxièmes informations partielles (ARI classe B, ARI classe C, ARI classe D), par lesquelles les stations de base résidentielles (R-BS) se font reconnaître comme stations de base munies d'une autorisation d'accès publique vis-à-vis des deuxièmes appareils de télécommunication (RT) propres aux systèmes de télécommunication et/ou étrangers aux systèmes de télécommunication.

2. Procédé selon la revendication 1, **caractérisé en ce que** les stations de base résidentielles (R-BS) s'authentifient après la transmission des premières informations (M1) et avant la transmission des deuxièmes informations (M2) auprès des exploitants de réseau par des procédures d'authentification spécifiques.

3. Procédé selon la revendication 1 ou 2, **caractérisé en ce que** les autorisations reçues par les stations de base résidentielles (R-BS) par les réseaux de télécommunication (TKN) à la réception des deuxièmes informations (M2) se font reconnaître comme stations de base munies d'une autorisation d'accès publique pour les deuxièmes appareils de télécommunication (RT), lesquelles autorisations peuvent être annulées côté communication par les exploitants de réseau par la transmission de troisièmes informations (M3) des réseaux de télécommunication (TKN) aux stations de base résidentielles (R-BS).

4. Procédé selon l'une des revendications 1 à 3, **caractérisé en ce que** les autorisations reçues par les stations de base résidentielles (R-BS) à la réception des deuxièmes informations (M2) des réseaux de télécommunication (TKN), se font reconnaître comme stations de base munies d'une autorisation d'accès public pour les deuxièmes appareils de télécommunication (RT), lesquelles autorisations peuvent être annulées côté station par les utilisateurs des stations de base résidentielles (R-BS) par la transmission de quatrièmes informations (M4) des stations de base résidentielles (R-BS) aux réseaux de télécommunication (TKN).

5. Procédé selon l'une des revendications 1 à 4, **caractérisé en ce que** la transmission des premières informations (M1) et quatrièmes informations (M4) est déclenchée au niveau des stations de base résidentielles (R-BS) par des procédures de commande spécifiques aux usagers.

6. Procédé selon la revendication 3 ou 4, **caractérisé en ce que** les utilisateurs de stations de base résidentielles (R-BS) et les exploitants transmettent à l'autre partie respective des informations supplémentaires, qui annoncent leur intention d'annuler les autorisations.

7. Procédé selon l'une des revendications 1 à 6, **caractérisé en ce que** les systèmes de télécommunication sont des systèmes DECT, les stations de base des stations de base DECT et/ou des répéteurs DECT et les appareils de télécommunication des parties mobiles DECT et/ou des modules de terminaison de réseau DECT avec des terminaux câblés affectés à ceux-ci et présentent les interfaces de commande.

8. Procédé selon l'une des revendications 1 à 7, **caractérisé en ce que** les réseaux de télécommunication (TKN) sont des réseaux RNIS et les interfaces de réseau (NSS) des interfaces α spécifiques au RNIS.

9. Procédé selon l'une des revendications 1 à 7, **caractérisé en ce que** les réseaux de télécommunication (TKN) sont des réseaux PSTN, des réseaux GSM ou des réseaux hybrides en ce qui concerne les méthodes d'accès multiple CDMA-/FDMA-/TDMA et les interfaces de réseau (NSS) des interfaces de réseau spécifiques PSTN, des interfaces de réseau spécifiques GSM ou des interfaces de réseau spécifiques en ce qui concerne les réseaux hybrides.

10. Procédé selon l'une des revendications 1 à 6, **caractérisé en ce que** les systèmes de télécommunication sont des systèmes GSM, les stations de base des stations de base GSM dotées d'équipements de communication centraux et les appareils de télécommunication des parties mobiles GSM et/ou des modules de terminaison de réseau GSM équipés de terminaux câblés affectés à ceux-ci et présentant des interfaces de commande.

11. Procédé selon l'une des revendications 1 à 6, **caractérisé en ce que** les systèmes de télécommunication sont des systèmes hybrides en ce qui concerne les méthodes d'accès multiple CDMA-/FDMA-/TDMA, les stations de base des stations de base hybrides et les appareils de télécommunication des parties mobiles hybrides et/ou des modules de terminaison de réseaux hybrides munis de terminaux câblés affectés à ceux-ci et présentant des interfaces de commande.

12. Procédé selon la revendication 6, **caractérisé en ce que** les premières informations (PARI) sont des informations PARI spécifiques DECT, les deuxièmes informations (SARI, TARI) des informations SARI spécifiques à DECT et/ou des informations TARI, les premières informations partielles (ARI classe A) contiennent dès données "ARI classe A" et le cas échéant des données spécifiques au système de télécommunication et les deuxièmes informations partielles (ARI classe b, ARI classe C, ARI classe D) "des données ARI classe B, des données ARI classe C et/ou des données ARI classe D" et le cas échéant des données spécifiques au système de télécommunication.

13. Procédé selon la revendication 12, **caractérisé en ce que** les premières informations sont des messages "SARI/TARI-REQUEST" spécifiques aux interfaces de réseau et les deuxièmes informations (M2) des messages "SARI/TARI-CONFIRM".
